Europäisches Patentamt

European Patent Office

Office européen des brevets

(11) Numéro de publication: **0 082 900**
**A1**

## (12) DEMANDE DE BREVET EUROPEEN

(21) Numéro de dépôt: **81420195.0**

(22) Date de dépôt: **30.12.81**

(51) Int. Cl.³: **B 62 J 1/08**

(43) Date de publication de la demande:
06.07.83 **Bulletin 83/27**

(84) Etats contractants désignés:
**BE DE IT NL**

(71) Demandeur: **Patriarca, Jean**
**50 Cours Vitton**
**F-699006 Lyon(FR)**

(72) Inventeur: **Patriarca, Jean**
**50 Cours Vitton**
**F-699006 Lyon(FR)**

(74) Mandataire: **Monnier, Guy et al,**
**Cabinet Monnier 142-150 Cours Lafayette**
**F-69003 Lyon(FR)**

(54) **Perfectionnements aux supports réglables pour selles de cycles.**

(57) L'invention a pour objet un support réglable ou "tige de selle" pour la fixation d'une selle sur le cadre d'un cycle en permettant la modification de l'orientation et de la position de la selle.

Sur la crosse (10) du tube de selle (1) coulisse un chariot (2) dont les empreintes (22) coopèrent avec des empreintes correspondantes (31) d'une tête (3), réunie à ladite crosse par une vis unique (4) qui traverse une lumière allongée (11) de la crosse pour se visser dans un taraudage (32) de la tête.

Fig. 1

Perfectionnements aux supports réglables pour selles de cycles.

La présente invention a trait aux dispositifs connus dans l'industrie du cycle sous l'appellation de "tiges de selle" et destinés à former supports pour l'armature inférieure des selles de bicyclettes, cyclomoteurs et engins similaires, en vue d'en permettre le réglage en orientation angulaire et en position axiale par rapport à la partie supérieure du cadre.

On sait qu'on a depuis peu proposé de remplacer les systèmes classiques à bride et à mors annulaires par des dispositifs plus élaborés, présentant une esthétique améliorée et permettant en outre une utilisation beaucoup plus aisée. Toutefois ces dispositifs, qui font le plus souvent appel à des organes susceptibles de se déplacer angulairement sur une partie à profil concave ou convexe rapportée au sommet du tube de selle, sont de construction encore complexe et donc coûteuse, et comprennent généralement un nombre relativement élevé de pièces constitutives qui complique les opérations de montage.

Les perfectionnements qui font l'objet de la présente invention ont plus spécialement pour but de remédier aux inconvénients précités et de permettre la réalisation d'un support orientable ou "tige de selle" qui soit susceptible de répondre particulièrement bien aux divers desiderata de la pratique.

L'invention consiste principalement - en même temps qu'à faire comporter à la partie supérieure du tube de selle un profil cintré en forme de crosse à convexité tournée vers le haut - à monter sur cette crosse un chariot pourvu d'empreintes qui en coopération avec des empreintes correspondantes prévues sur une tête supérieure forment des mors pour le serrage de la base de l'armature de la selle, et à assurer le blocage dudit chariot et le rapprochement des mors précités à l'aide d'une vis unique qui traverse la crosse à travers une lumière allongée et qui se visse dans un taraudage

**0082900**

ménagé dans la tête sus-mentionnée.

Le dessin annexé, donné à titre d'exemple, permettra de mieux comprendre l'invention, les caractéristiques qu'elle présente et les avantages qu'elle est susceptible de procurer :

Fig. 1 est une vue en perspective montrant, préalablement à leur assemblage, les différents organes constitutifs d'un support de selle établi conformément à l'invention.

Fig. 2 reproduit fig. 1 après montage des organes et mise en place de la partie inférieure de l'armature d'une selle usuelle.

Fig. 3 est une coupe verticale schématique, suivant le plan indiqué en III-III en fig. 2.

Sur ce dessin la référence 1 désigne la partie supérieure du tube destiné a être rapporté sur le cadre du cycle afin d'assurer la fixation réglable de la selle. A la façon connue le tube 1 présente à son sommet une semelle 10 à profil cintré en forme de crosse à convexité tournée vers le haut. Il convient d'observer que la partie centrale de la semelle ou crosse 10 est découpée d'une lumière 11 qui s'étend longitudinalement suivant l'axe de ladite semelle.

Le support suivant l'invention comprend en outre un chariot 2 découpé d'une large ouverture centrale 20. Les bords longitudinaux de ce chariot 2 se prolongent vers le bas afin de déterminer des guides ou rebords latéraux 21 qui assurent le centrage de l'ensemble dudit chariot sur la semelle ou crosse 10. A l'opposé de ces rebords 21 le chariot 2 est creusé d'empreintes longitudinales 22, alignées deux par deux.

Au chariot 2 est associée une tête 3 profilée de manière à s'engager par sa base 30 dans l'ouverture 20 dudit chariot. La tête 3 présente deux empreintes 31 qui s'ouvrent en direction du bas pour coopérer avec les empreintes 22 sus-

3

0082900

décrites ; de plus elle est percée d'un taraudage vertical 32 afin de recevoir une vis d'assemblage 4, propre à être engagée à partir du bas pour traverser la lumière 11.

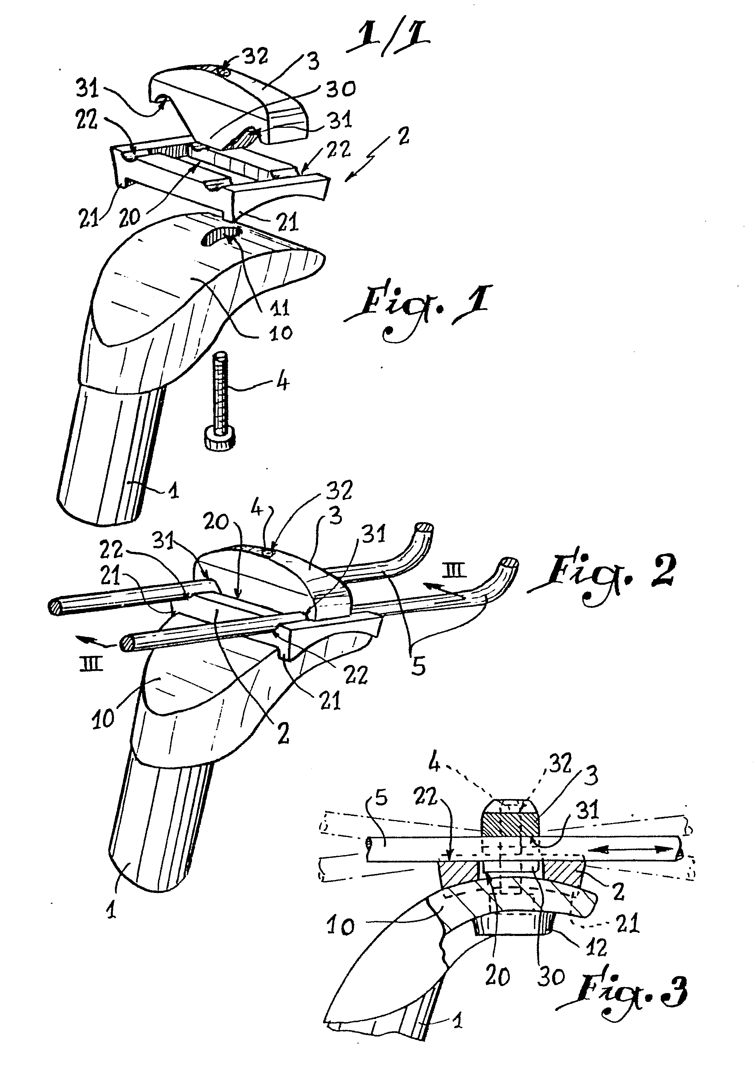

L'ensemble de l'agencement du support ou "tige de selle" suivant l'invention ressort de l'examen de fig. 1. En fig. 2 on a supposé que la vis d'assemblage 4 avait été mise en place et que les deux tiges parallèles 5 qui constituent la base d'une selle de type usuel avaient été engagées entre les mors formés par les empreintes 22 et 31 en vis-à-vis. L'on conçoit que la manoeuvre de la vis 4 (dont la tête vient avantageusement se loger à l'intérieur du bossage référencé 12 en fig. 3 et prévu sur la face inférieure de la semelle ou crosse 10) permet d'opérer le serrage de ces mors. Préalablement au blocage à force de cette vis 4, l'opérateur peut faire coulisser axialement les tiges 5 vers l'avant ou vers l'arrière pour le réglage de la position longitudinale de la selle sur le cadre du cycle ; par ailleurs le chariot 2 lui-même est susceptible d'être déplacé sur la semelle 10 en permettant le réglage de l'inclinaison de la selle, les rebords 21 assurant le centrage dudit chariot lors de l'opération.

On remarquera que l'ensemble du support présente un encombrement très réduit et un aspect sobre et esthétique. Le nombre de pièces est limité et le montage de ces pièces comme le réglage de la selle peuvent être effectués de manière très simple.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

4

## Revendications de Brevet

1. Support réglable pour selle de cycle, du genre comprenant un organe mobile qui est agencé d'une part pour se déplacer le long d'une partie cintrée en forme de crosse prévue à la partie supérieure du tube de selle et d'autre part pour bloquer axialement la base de l'armature de la selle en permettant son réglage en position longitudinale et en inclinaison, caractérisé en ce que l'organe mobile est constitué par un chariot (2) dont la partie supérieure présente des empreintes (22) propres, en coopération avec des empreintes correspondantes (31) ménagées sur une tête supérieure de serrage (3), à constituer mors pour le blocage de la base (5) de l'armature, le rapprochement à force de ladite tête et du chariot étant assuré à l'aide d'une vis unique (4) engagée à travers une lumière allongée (11) pratiquée dans la partie cintrée ou crosse (10) du tube de selle (1) et vissée dans un taraudage (32) de la tête sus-mentionnée.

2. Support suivant la revendication 1, caractérisé en ce que la partie centrale du chariot est ajourée pour le passage de la vis de serrage.

3. Support suivant l'une quelconque des revendications 1 et 2, caractérisé en ce que le chariot comporte des rebords latéraux (21) tournés vers le bas pour coopérer avec les bords de la partie cintrée ou crosse en vue d'assurer le centrage dudit chariot sur celle-ci.

Revendication

Support réglable pour selle de cycle, caractérisé en ce qu'il comprend en combinaison :

- une semelle cintrée en forme de crosse à génératrices rectilignes, prévue à la partie supérieure du tube de selle et dont la face supérieure convexe présente une paroi lisse ;

- un chariot ajouré en forme de cadre, pourvu de rebords latéraux tournés vers le bas pour coopérer avec les bords de la semelle en assurant le guidage dudit chariot sur celle-ci, la face supérieure des parties transversales de ce chariot étant creusée d'empreintes ou mors ;

- une tête supérieure pourvue d'une base profilée pour s'engager dans l'ouverture centrale du chariot, la face inférieure de cette tête étant creusée, de part et d'autre de la base précitée, de mors ouverts en vis-à-vis des mors précités dudit chariot ;

- et une vis d'assemblage qui traverse une lumière allongée ménagée dans la semelle pour se visser dans un taraudage vertical de la tête afin que son serrage assure par rapprochement à force des mors l'immobilisation du chariot et des tiges parallèles usuelles de la selle introduites dans lesdits mors, en permettant ainsi le réglage de cette selle en position longitudinale et en inclinaison verticale.

1/1

Fig. 1

Fig. 2

Fig. 3

**Office européen des brevets**

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR-A-2 411 754 (LE SIMPLEX) <br> * figures 1 à 15; page 2, lignes 30 à 40; pages 3 à 6 * | 1,2,3 | B 62 J 1/08 |
| | --- | | |
| A | GB-A-2 076 756 (LE SIMPLEX) <br> * figures 1 à 10; page 1, lignes 69-129; page 2, lignes 1-42 * | 1 | |
| | --- | | |
| A | FR-A-2 480 697 (SHIMANO) <br> * figures 1 à 6; page 3, lignes 22-37; pages 4-8 * | 1 | |
| | --- | | |
| A | FR-A-2 409 182 (LES USINES LAPRADE) <br> * figures 1 à 3; page 3, lignes 25-40; pages 4,5 * | 1 | |
| | --- | | DOMAINES TECHNIQUES RECHERCHES (Int. Cl. ³) |
| A | FR-A-2 413 995 (LES USINES LAPRADE) <br> * figures 1 à 4; page 2, lignes 9-40; page 3 * | 1 | B 62 J <br> B 62 K |
| | --- | | |
| E | FR-A-2 485 463 (PATRIARCA) <br> * figures 1 à 3; pages 2,3 * | 1,2,3 | |
| | ----- | | |

Le présent rapport de recherche a été établi pour toutes les revendications

| Lieu de la recherche | Date d'achèvement de la recherche | Examinateur |
|---|---|---|
| LA HAYE | 13-09-1982 | VANNESTE M.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82